(19) Europäisches Patentamt
European Patent Office
Office européen des brevets

(11) EP 2 008 517 A1

(12) EUROPÄISCHE PATENTANMELDUNG

(43) Veröffentlichungstag:
**31.12.2008 Patentblatt 2009/01**

(21) Anmeldenummer: **07111412.8**

(22) Anmeldetag: **29.06.2007**

(51) Int Cl.:
***A01N 43/08*** *(2006.01)* ***A01N 53/00*** *(2006.01)*
***A01N 47/24*** *(2006.01)* ***A01N 43/90*** *(2006.01)*
***A01N 43/58*** *(2006.01)* ***A01N 43/56*** *(2006.01)*
***A01N 43/54*** *(2006.01)* ***A01N 41/02*** *(2006.01)*
***A01P 7/02*** *(2006.01)*

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Bayer CropScience AG**
**40789 Monheim (DE)**

(72) Erfinder: **Die Erfindernennung liegt noch nicht vor**

(54) **Akarizide Wirkstoffkombinationen**

(57) Die vorliegende Erfindung betrifft die Verwendung von Wirkstoffkombinationen, die aus einem bekannten Dihydrofuranon-Derivat einerseits und weiteren bekannten pestiziden Wirkstoffen andererseits bestehen, zur Bekämpfung von tierischen Schädlingen aus der Ordnung der Milben.

EP 2 008 517 A1

## Beschreibung

Die vorliegende Erfindung betrifft die Verwendung von Wirkstoffkombinationen, die aus einem bekannten Dihydrofuranon-Derivat einerseits und weiteren bekannten pestiziden Wirkstoffen andererseits bestehen, zur Bekämpfung von tierischen Schädlingen aus der Ordnung der Milben.

Es ist bereits bekannt, dass das Dihydrofuranon-Derivat der Formel

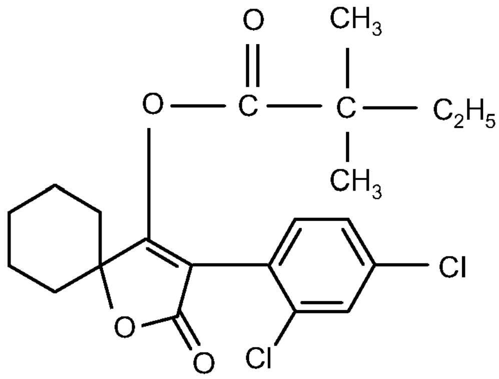

(I)

zur Bekämpfung von tierischen Schädlingen, wie Insekten und unerwünschten Akariden eingesetzt werden kann (vgl. EP-A-0528156). Die Wirksamkeit dieses Stoffes ist gut, lässt aber bei niedrigen Aufwandmengen in manchen Fällen zu wünschen übrig.

Weiterhin bekannt sind Mischungen von (I) mit anderen Insektiziden und/oder Akarziden: DE-A-19939395, WO 00/56156, WO 01/24634 und WO 01/33966.

Es wurde nun gefunden, dass sich die Wirkstoffkombinationen enthaltend das Dihydrofuranon-Derivat der Formel

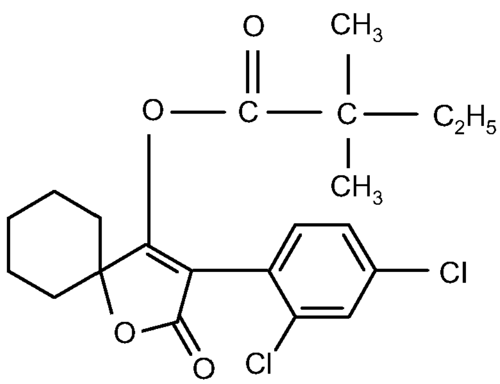

(I)

und Wirkstoffe aus den IRAC-Klassen der Natrium-Kanal-Modulatoren/Blocker und/oder Seite-I-Elektronentransportinhibitoren und/oder Chlorid-Kanal-Aktivatoren, und/oder Inhibitoren der Magnesium-stimulierten AT Pase und/oder Bifenazat besonders gut zur Bekämpfung von tierischen Schädlingen aus der Ordnung der Milben in einjährigen Kulturen eignen. Überraschenderweise ist insbesondere die akarizide Wirkung der Wirkstoffkombinationen höher als die Summe der Wirkungen der einzelnen Wirkstoffe.

Besonders bevorzugt sind die Wirkstoffkombinationen enthaltend die Verbindung der Formel(I) und mindestens eine der nachfolgenden Verbindungen:

(1) das Phenylhydrazin-Derivat der Formel

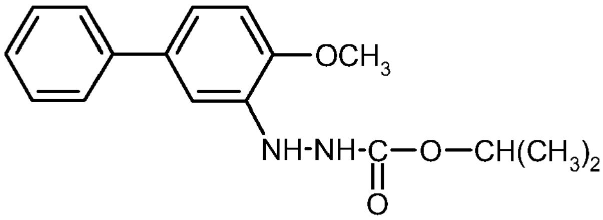

(II)

Bifenazat bekannt aus WO 93/10 083
und/oder

(2) aus der Klasse der Seite-(I)-Elektronentransportinhibitoren das Pyrazol Derivat der Formel

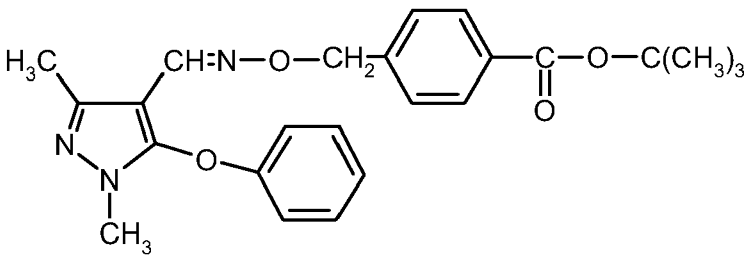

(III)

Fenpyroximat bekannt aus EP-A-234 045
und/oder
das Pyridazinon-Derivat der Formel

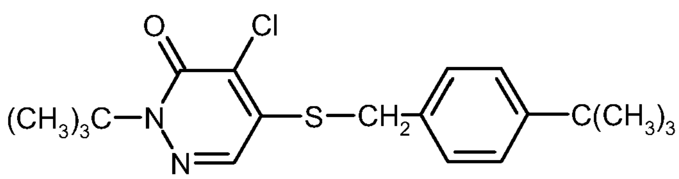

(IV)

und/oder
Fenazaquin

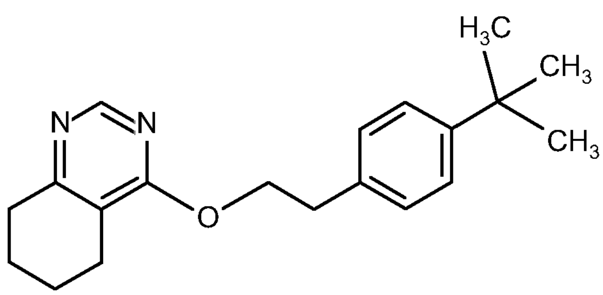

(V)

bekannt aus EP-A-326 329
und/oder

(3) aus der Klasse der Chlorid-Kanal-Aktivatoren

Abamectin (VI) bekannt aus DE-A-02717040
und/oder
Emamectin benzoat (VII) bekannt aus EP-A-0089202
und/oder

(4) aus der Klasse der Natrium-Kanal-Modulatoren/Blocker

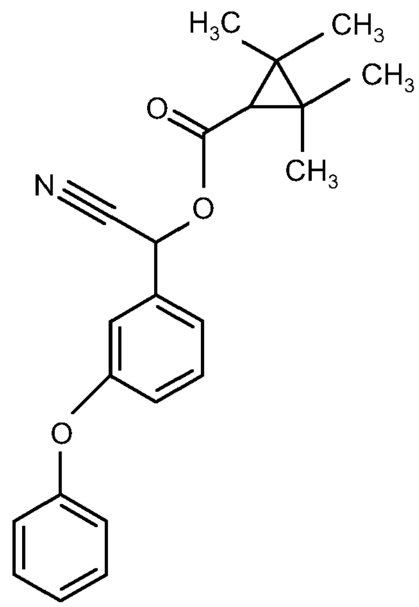

(VIII)

Fenpropathrin bekannt aus DE-A-02231312
und/oder

(5) aus der Klasse der Magnesium-stimuliertn AT Pase Wirkstoffen

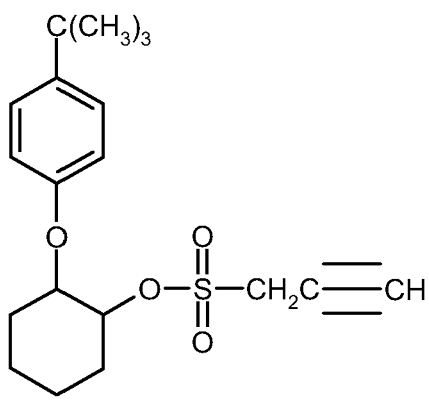

(IX)

Propargit bekannt aus US 3,272,854.

Die Wirkstoffkombinationen enthalten neben dem Wirkstoff der Formel (I) mindestens einen Wirkstoff von den Verbindungen der Formeln (II) bis (IX).

Die Wirkstoffkombinationen können darüber hinaus noch weitere fungizid, akarzid oder insektizid wirksame Zumischkomponenten enthalten.

Wenn die Wirkstoffe in den erfindungsgemäßen Wirkstoffkombinationen in bestimmten Gewichtsverhältnisse vorhanden sind, zeigt sich die verbesserte Wirkung besonders deutlich. Jedoch könnend die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formel (I) und den Mischpartner in der nachfolgenden Tabelle angegeben bevorzugten und besonders bevorzugten Mischungsverhältnissen:

* die Mischungsverhältnisse basieren auf Gewichtsverhältnissen. Das Verhältnis ist zu verstehen als Wirkstoff der Formel (I): Mischpartner

| **Mischpartner** | **bevorzugtes Mischungs-verhältnis** | **besonders bevorzugtes Mischungs-verhältnis** |
|---|---|---|
| Bifenazat (II) | 5:1 bis 1:25 | 5:1 bis 1:5 |
| Fenpyroximat (III) | 25:1 bis 1:25 | 5:1 bis 1:5 |
| Pyridaben (IV) | 25:1 bis 1:25 | 5:1 bis 1:5 |
| Fenazaquin (V) | 25:1 bis 1:25 | 5:1 bis 1:5 |
| Abamectin (VI) | 125:1 bis 1:25 | 25:1 bis 1:5 |
| Emamectin benzoat (VII) | 125:1 bis 1:25 | 5:1 bis 1:5 |
| Fenpropathrin (VIII) | 25:1 bis 1:25 | 5:1 bis 1:5 |
| Propargit (IX) | 10:1 bis 1:25 | 5:1 bis 1:5 |

Die Wirkstoffkombinationen eignen sich zur Bekämpfung von tierischen Schädlingen, vorzugsweise Arthropoden und Nematoden, insbesondere Insekten und/oder Spinnentieren, die im Wein- und Obstanbau, in der Gartenwirtschaft, in der Landwirtschaft und in Forsten, vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp..

Aus der Ordnung der Phthiraptera z.B. Pediculus humanus corporis, Haematopinus spp., Linognathus spp., Trichodectes spp., Damalinia spp..

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp..

Aus der Ordnung der Siphonaptera z.B. Xenopsylla cheopis, Ceratophyllus spp..

Aus der Klasse der Arachnida z.B. Scorpio maurus, Latrodectus mactans, Acarus siro, Argas spp., Aculus spp., Ornithodoros spp., Dermanyssus gallinae, Eriophyes spp., Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Eotetranychus spp., Oligonychus spp., Hemitarsonemus spp., Brevipalpus spp..in einjährigen Kulturen wie z.B. Gemüse, Melonen, Zierpflanzen, Mais aber auch in mehrjährigen Pflanzen, wie z.B. Zitrus, Kern- und Steinobst, Gewürze, Coniferen und andere Zierpflanzen sowie im Forst.

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken; aber auch Blattgemüse, beispielsweise Kopfsalat, Chicoreé, Endivien, Kressen, Rauken, Feldsalat, Eisbergsalat, Lauch, Spinat, Mangold;
weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;
ferner Kohlgemüse, wie Blumenkohl, Broccoli, Kohlrabi, Rotkohl, Weißkohl, Grünkohl, Wirsing, Rosenkohl, Chinakohl.

Hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;
weiterhin Wein, Hopfen, Oliven, Tee und tropische Kulturen, wie beispielsweise Mangos, Papayas, Feigen, Ananas,

Datteln, Bananen, Durians (Stinkfrüchte), Kakis, Kokosnüsse, Kakao, Kaffee, Avocados, Litschies, Maracujas, Guaven, außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amarillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien, ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Besonders bevorzugt sind aus der Ordnung der Milben (Acari), die Familien der Gallmilben (Eriophyidae), Weichhautmilben (Tarsonemidae) und Spinnmilben (Tetranychidae).

Gallmilben (Eriophyidae)

Ganz besonders bevorzugt ist die Bekämpfung folgender Arten aus der Familie der Gallmilben (Eriophyidae) in folgenden Kulturen:

| | |
|---|---|
| Aculops lycopersici<br>Aculops pelekassi | in Gemüse wie z.B. Tomaten, Auberginen, in Citrus wie z.B. Orangen, Grapefruits, Mandarinen |
| Aculus schlechtendali fokeui,<br>Aculus berochensis<br>Aculus conutus | in Kernobst wie z.B. Äpfel, in Steinobst wie z.B Aculus Zwetschgen, Pfirsiche |
| Aceria sheldoni<br>Aceria tulipai | in Zitrus wie z.B. Organgen, Klementinen, Limonen, in Gemüse wie z.B. Zwiebeln, Getreide wie z.B. Weizen |
| Epitrimerus pyri<br>Epitrimerus vitis | in Kernobst wie z.B. Birnen, in Wein |
| Eriophyes avellanae<br>Eriophyes guerreronis<br>Eriophyes litchii<br>Eriophyes piri<br>Eriophyes ribis<br>Eriophyes theae<br>Eriophyes vitis | in Nüssen, wie z.B. Haselnüsse, in Coniferen, in tropischen Kulturen, wie z.B. Kokosnüsse, Litchies, in Kernobst, wie z.B. z.B. Birnen, in Beerenfrüchten, wie z.B. Johannisbeeren, in Tee, in Wein |
| Phyllocoptrutua oleivora | in Citrus, wie z.B. Ogangen, Grapefruits, Mandarinen |

Weichhautmilben (Tarsonemidae)

Ganz besonders bevorzugt ist die Bekämpfung folgender Arten aus der Familie der Weichhautmilben (Tarsonemidae) in folgenden Kulturen:

| | |
|---|---|
| Hemitarsonemus latus | in Zierpflanzen, in Baumwolle, in Gemüse, wie z.B. Chilli, Paprika, Tee, Koniferen |

Spinnmilben (Tetranychidae)

Ganz besonders bevorzugt ist die Bekämpfung folgender Arten aus der Familie der Spinnmilben (Tetranychidae) in folgenden Kulturen:

| | |
|---|---|
| Brevipalpus lewisi<br>Brevipalpus obovatus<br>Brevipalpus oudemansi<br>Brevipalpus phoenicis | in Zitrus, wie z.B. Orangen, Zitronen, Grapefruits, Mandarinen, in Zierpflanzen, z.B. Nachtschattengewächse, in Kaffee, in tropischen Früchten, wie z.B. Mangos, Passionsfrüchte, Papayas, in Wein, in Tee, in Kernobst, wie z.B. Äpfel und Birnen, in |

| | |
|---|---|
| | Nüssen z.B. Walnüsse |
| Eotetranychus carpirii<br>Eotetranychus willamelti<br>Eotetranychus hicoriae<br>Eotetranychus yumensis | in Wein, in Nüssen, wie z.B. Pecannüsse, in Citrus wie z.B. Limonen, Klementinen, Grapefruits, Kernobst, z.B. Äpfel |
| Panonychus citri<br>Panonychus ulmi | in Wein, in Kernobst, z.B. Äpfel, Birnen, in Steinobst, z.B. Pfirsiche, Kirschen, Zwetschgen, Pflaumen, in Citrus, wie z.B. Orangen, Mandarinen, Grapefruits, Limonen, in Beerenfrüchten, wie z.B. Johannisbeeren, in Nüssen, wie z.B. Mandeln, Walnüsse |
| Tetranychus canadensis<br>Tetranychus urtricae<br>Tetranychus parcificus<br>Tetranychus cinnabarinus<br>Tetranychus turkestani<br>Tetranychus viennensis<br>Tetranychus kanzawai | in Kernobst, wie z.B. Äpfel, Birnen, in Steinobst, wie z.B. Pflaumen, Pfirsiche, Kirschen, in Beerenobst, wie z.B. Erdbeeren, Stachelbeeren, Himbeeren, in Gemüse, wie z.B. Tomaten, Auberginen, Paprika, Chillis, in Zierpflanzen, wie z.B. Orchideen, Schönmalven, in Coniferen, in Gehölzen, in Wein, in Nüssen, wie z.B. Mandeln, Pistazien, in Baumwolle, in Tee, in Hopfen |
| Oligonychus coffeae<br>Oligonychus ilicis<br>Oligonychus mexicanus Wein<br>Oligonychus persea<br>Oligonychus punicae | in Kaffee, in Mais, in tropischen Früchten, wie z.B. Avocados, Persimon, in Steinobst, wie z.B. Pflaumen, in |

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit dem Wirkstoff erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injezieren und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wird (Genetic Modified Organisms) und deren Teile behandelt. Der Begriff "Teile" bzw. "Teile von Pflanzen" oder "Pflanzenteile" wird oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte

Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylhamstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Als Streckmittel eignen sich z.B. Wasser, polare und unpolare organische chemische Flüssigkeiten z.B. aus den Klassen der aromatischen und nichtaromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Die aufgeführten Pflanzen können besonders vorteilhaft erfindungsgemäß mit der erfindungsgemäßen Wirkstoffmischung behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die gute insektizide Wirkung der Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22) wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide Abtötungsgrad größer als berechnet, so ist die Kombination in ihrer Abtötung überadditiv, d.h. es liegt ein synergistischer Effekt vor. In diesem Fall muß der tatsächlich beobachtete Abtötungsgrad größer sein als der aus der oben angeführten Formel errechnete Wert für den erwarteten Abtötungsgrad (E).

**Beispiel A**

**Panonychus ulmi -Test**

Lösungsmittel: 7 Gewichtsteile Dimethylformamid

Emulgator: 2 Gewichtsteile Alkylarylpolyglykolether

Zur Herstellung einer zweckmäßigen Wirkstoffzubereitung vermischt man 1 Gewichtsteil Wirkstoff mit den

angegebenen Mengen Lösungsmittel und Emulgator und verdünnt das Konzentrat mit Wasser auf die gewünschten Konzentrationen.

Pflaumenstecklinge (*Prunus domestica*), die mit einer gemischten Population der Obstbaumspinnmilbe (*Panonychus ulmi*) infiziert sind, werden mit der Wirkstoffzubereitung in der gewünschten Konzentration besprüht.

Nach der gewünschten Zeit wird die Abtötung in % bestimmt. Dabei bedeutet 100%, dass alle Spinnmilben abgetötet wurden; 0% bedeutet, dass keine Spinnmilben abgetötet wurden.

Bei diesem Test zeigten die folgenden Wirkstoffkombinationen gemäß vorliegender Anmeldung eine synergistisch verstärkte Wirksamkeit im Vergleich zu den einzeln angewendeten Wirkstoffen:

Tabelle A

| Pflanzenschädigende Milben | | |
|---|---|---|
| **Panonychus ulmi - Test** | | |
| **Wirkstoff** | **Konzentration in ppm** | **Abtötung in % nach 2d** |
| **Spirodiclofen (I)** | 0,8 | 5 |
| **Bifenazate (II)** | 0,8 | 10 |
| **Spirodiclofen (I)+ Bifenazate (II) (1 : 1)** erfindungsgemäß | **0,8 + 0,8** | **gef.*** **80** / **ber.**** **14,5** |
| **Fenazaquin (V)** | 0,8 | 0 |
| **Spirodiclofen (I)+ Fenazaquin (V) (1 : 1)** erfindungsgemäß | **0,8 + 0,8** | **gef.*** **40** / **ber.**** **5** |
| * gef. = gefundene Wirkung<br>** ber. = nach der Colby-Formel berechnete Wirkung | | |

**Beispiel B**

**Tetranychus urticae -Test** (OP-resistent)

Lösungsmittel: 7 Gewichtsteile Dimethylformamid

Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschten Konzentrationen.

Gurkenpflanzen (Cucumis sativus), die stark mit der Gemeinen Spinnmilbe (*Tetranychus urticae*) infiziert sind, werden mit der Wirkstoffzubereitung in der gewünschten Konzentration besprüht.

Nach der gewünschten Zeit wird die Abtötung in % bestimmt. Dabei bedeutet 100%, dass alle Spinnmilben abgetötet wurden; 0% bedeutet, dass keine Spinnmilben abgetötet wurden.

Bei diesem Test zeigte die folgende Wirkstoffkombination gemäß vorliegender Anmeldung eine synergistisch verstärkte Wirksamkeit im Vergleich zu den einzeln angewendeten Wirkstoffen:

Tabelle B

| Pflanzenschädigende Milben | | |
|---|---|---|
| **Tetranychus urticae - Test** | | |
| **Wirkstoff** | **Konzentration in ppm** | **Abtötung in % nach 7d** |
| **Spirodiclofen (I)** | | |

(fortgesetzt)

| Pflanzenschädigende Milben | | | |
|---|---|---|---|
| **Tetranychus urticae - Test** | | | |
| **Wirkstoff** | **Konzentration in ppm** | **Abtötung in % nach 7$^d$** | |
| | 0,16 | 25 | |
| **Bifenazate (II)** | 0,16 | 15 | |
| **Spirodiclofen (I)+ Bifenazate (II) (1 : 1)** erfindungsgemäß | **0,16 + 0,16** | **gef.* 60** | **ber.** 36,25** |
| | | | |
| **Wirkstoff** | **Konzentration in ppm** | **Abtötung in % nach 14$^d$** | |
| **Spirodiclofen (I)** | 0,032 | 15 | |
| **Fenazaquin (V)** | 0,16 | 0 | |
| **Spirodiclofen (I) + Fenazaquin (V) (1 : 1)** erfindungsgemäß | **0,032 + 0,16** | **gef.* 40** | **ber.** 15** |
| * gef. = gefundene Wirkung<br>** ber. = nach der Colby-Formel berechnete Wirkung | | | |

**Beispiel C**

**Grenzkonzentrations-Test / Bodeninsekten - Behandlung transgener Pflanzen**

Testinsekt: **Diabrotica balteata - Larven im Boden**

Lösungsmittel: 7 Gewichtsteile Aceton

Emulgator: 2 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird auf den Boden gegossen. Dabei spielt die Konzentration des Wirkstoffs in der Zubereitung praktisch keine Rolle, entscheidend ist allein die Wirkstoffgewichtsmenge pro Volumeneinheit Boden, welche in ppm (mg/l) angegeben wird. Man füllt den Boden in 0,25 1 Töpfe und läßt diese bei 20˚C stehen.

Sofort nach dem Ansatz werden je Topf 5 vorgekeimte Maiskörner der Sorte YIELD GUARD (Warenzeichen von Monsanto Comp., USA) gelegt. Nach 2 Tagen werden in den behandelten Boden die entsprechenden Testinsekten gesetzt. Nach weiteren 7 Tagen wird der Wirkungsgrad des Wirkstoffs durch Auszählen der aufgelaufenen Maispflanzen bestimmt (1 Pflanze = 20 % Wirkung).

**Beispiel D**

**Heliothis virescens - Test - Behandlung transgener Pflanzen**

Lösungsmittel: 7 Gewichtsteile Aceton

Emulgator : 2 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Sojatriebe (Glycine max) der Sorte Roundup Ready (Warenzeichen der Monsanto Comp. USA) werden durch Besprühen mit der Wirkstoffzubereitung in der gewünschten Konzentration behandelt und mit der Tabakknospenraupe Heliothis virescens besetzt, solange die Blätter noch feucht sind.

Nach der gewünschten Zeit wird die Abtötung der Insekten bestimmt.

**Beispiel E**

**Myzus persicae - Test - Behandlung transgener Pflanzen**

Lösungsmittel: 7 Gewichtsteile Aceton

Emulgator : 2 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Transgene Kohlpflanzen (Brassica oleracea), die stark mit einer gemischten Population der Grünen Pfirsichblattlaus infiziert sind, werden durch Spritzen mit der Wirkstoffzubereitung in der gewünschten Konzentration behandelt.

Nach der gewünschten Zeit wird die Abtötung der Insekten bestimmt.

**Patentansprüche**

**1.** Verwendung von Wirkstoffkombinationen enthaltend die Verbindungen der Formel (I)

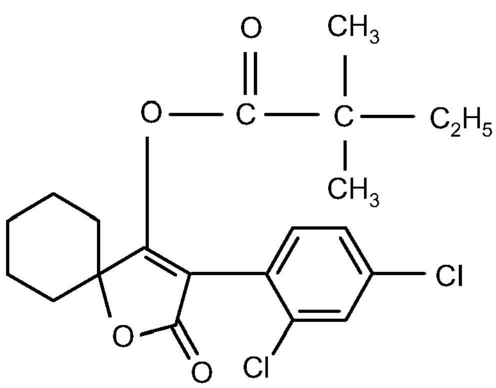

(I)

und mindestens eine der nachfolgenden Verbindungen:

Bifenazat
Fenpyroximat
Pyridaben
Fenazaquin
Abamectin
Emamectin

Fenpropathrin
Propargit
zur Bekämpfung von tierischen Schädlingen aus der Ordnung der Milben.

Europäisches Patentamt

# EUROPÄISCHER RECHERCHENBERICHT

Nummer der Anmeldung
EP 07 11 1412

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | DE 199 39 395 A1 (BAYER AG [DE]) 27. April 2000 (2000-04-27)<br>* Seite 2, Zeilen 27-56 *<br>* Seite 4, Zeilen 27-51 *<br>* Seite 6, Zeile 21; Beispiel A *<br>----- | 1 | INV.<br>A01N43/08<br>A01N53/00<br>A01N47/24<br>A01N43/90<br>A01N43/58<br>A01N43/56<br>A01N43/54<br>A01N41/02<br>A01P7/02 |
| D,X | WO 01/33966 A (BAYER AG [DE]; BRUECK ERNST [DE]; ERDELEN CHRISTOPH [DE]; FISCHER REIN) 17. Mai 2001 (2001-05-17)<br>* Seite 1, Zeilen 17-21 *<br>* Seite 17, Zeile 1 *<br>* Seite 24, Zeile 13 *<br>* Seite 26, Zeilen 6-13 *<br>* Seite 28, Zeilen 1-5 *<br>* Seite 33, Zeile 12 *<br>* Seite 35, Zeilen 9-14 *<br>* Seite 40, Zeilen 2-4 *<br>* Seite 42, Zeilen 18-23; Beispiel E *<br>----- | 1 | |
| Y | MIRIAM THIEL & RALF NAUEN: "Untersuchungen zur Akarizidresistenz an Populationen der Obstbaumsinnmilbe, Panonychus ulmi KOCH (Acari: Tetranychidae), aus dem Bodenseegebiet" GESUNDE PFLANZEN ; PFLANZENSCHUTZ - VERBRAUCHERSCHUTZ - UMWELTSCHUTZ, SPRINGER-VERLAG, BE,<br>Bd. 58, Nr. 4,<br>28. November 2006 (2006-11-28), Seiten 239-245, XP019446023<br>ISSN: 1439-0345<br>* Seite 243, Spalte 1, Absatz 2 - Seite 244, Spalte 1, Absatz 1 *<br>* Seite 244, Spalte 2, Absatz 2 *<br>-----<br>-/-- | 1 | RECHERCHIERTE SACHGEBIETE (IPC)<br>A01N |

Der vorliegende Recherchenbericht wurde für alle Patentansprüche erstellt

1

| Recherchenort | Abschlußdatum der Recherche | Prüfer |
|---|---|---|
| München | 15. Februar 2008 | Klaver, Jos |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 07 11 1412

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | U. WACHENDORFF ET AL.: "The biological profile of spirodiclofen (Envidor) - a new selective teronic acid acaricide" PFALNZENSCHUTZ-NACHRICHTEN BAYER, Bd. 55, Nr. 2-3, 2002, Seiten 149-176, XP002469182 * Seite 162, Spalte 1, Absatz 2 - Spalte 2, Absatz 2 * ----- | 1 | |
| A | WO 2005/004605 A (BAYER CROPSCIENCE AG [DE]; FISCHER REINER [DE]; BRUECK ERNST [DE]) 20. Januar 2005 (2005-01-20) * das ganze Dokument * ----- | 1 | |

RECHERCHIERTE SACHGEBIETE (IPC)

1 Der vorliegende Recherchenbericht wurde für alle Patentansprüche erstellt

| Recherchenort | Abschlußdatum der Recherche | Prüfer |
|---|---|---|
| München | 15. Februar 2008 | Klaver, Jos |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 07 11 1412

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-02-2008

| Im Recherchenbericht angeführtes Patentdokument | Datum der Veröffentlichung | Mitglied(er) der Patentfamilie | Datum der Veröffentlichung |
|---|---|---|---|
| DE 19939395 A1 | 27-04-2000 | AU 5268099 A | 04-05-2000 |
| | | BR 9905110 A | 15-08-2000 |
| | | CN 1252220 A | 10-05-2000 |
| | | FR 2784859 A1 | 28-04-2000 |
| | | IT MI992188 A1 | 19-04-2001 |
| | | JP 2000128710 A | 09-05-2000 |
| | | KR 20000028735 A | 25-05-2000 |
| | | NL 1013258 C2 | 14-11-2000 |
| | | NL 1013258 A1 | 26-04-2000 |
| | | TR 9902611 A2 | 21-02-2001 |
| | | ZA 9906662 A | 23-10-2000 |
| WO 0133966 A | 17-05-2001 | AU 1276501 A | 06-06-2001 |
| | | BR 0015453 A | 09-07-2002 |
| | | DE 19953775 A1 | 10-05-2001 |
| | | EP 1229791 A2 | 14-08-2002 |
| | | ES 2210011 T3 | 01-07-2004 |
| | | JP 2003513892 T | 15-04-2003 |
| | | TW 241886 B | 21-10-2005 |
| | | US 6576661 B1 | 10-06-2003 |
| WO 2005004605 A | 20-01-2005 | AU 2004255427 A1 | 20-01-2005 |
| | | BR PI0412586 A | 19-09-2006 |
| | | CN 1822766 A | 23-08-2006 |
| | | CN 101103722 A | 16-01-2008 |
| | | DE 10331674 A1 | 10-02-2005 |
| | | EP 1648231 A1 | 26-04-2006 |
| | | KR 20060037334 A | 03-05-2006 |
| | | MX PA06000521 A | 30-03-2006 |
| | | US 2007015825 A1 | 18-01-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0528156 A
- DE 19939395 A
- WO 0056156 A
- WO 0124634 A
- WO 0133966 A
- WO 9310083 A
- EP 234045 A
- EP 326329 A
- DE 02717040 A
- EP 0089202 A
- DE 02231312 A
- US 3272854 A


### In der Beschreibung aufgeführte Nicht-Patentliteratur


- **S.R. COLBY.** *Weeds,* 1967, vol. 15, 20-22